(19) 

**Europäisches Patentamt**
**European Patent Office**
**Office européen des brevets**

(11) **EP 4 478 517 A1**

(12) **EUROPEAN PATENT APPLICATION**
published in accordance with Art. 153(4) EPC

(43) Date of publication:
**18.12.2024 Bulletin 2024/51**

(51) International Patent Classification (IPC):
*H01M 50/451* (2021.01)   *H01M 50/443* (2021.01)
*H01M 50/46* (2021.01)   *H01M 50/491* (2021.01)
*B05D 1/04* (2006.01)   *B32B 37/06* (2006.01)
*B32B 37/10* (2006.01)   *B32B 27/08* (2006.01)
*B32B 27/18* (2006.01)   *B32B 27/36* (2006.01)

(21) Application number: 23835879.0

(22) Date of filing: 07.07.2023

(52) Cooperative Patent Classification (CPC):
**B05D 1/04; B32B 27/08; B32B 27/18; B32B 27/36;**
**B32B 37/06; B32B 37/10; H01M 50/443;**
**H01M 50/451; H01M 50/46; H01M 50/491;**
**Y02E 60/10**

(86) International application number:
**PCT/KR2023/009638**

(87) International publication number:
**WO 2024/010413 (11.01.2024 Gazette 2024/02)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 07.07.2022   KR 20220083685
26.08.2022   KR 20220107931

(71) Applicants:
• **LG Energy Solution, Ltd.**
**Seoul 07335 (KR)**
• **Yonsei University, University-Industry**
**Foundation(UIF).**
**Seoul 03722 (KR)**

(72) Inventors:
• **SHIN, Jin Young**
**Daejeon 34122 (KR)**

• **LEE, Sang Young**
**Seoul 03722 (KR)**
• **SUNG, Dong Wook**
**Daejeon 34122 (KR)**
• **KIM, Ji Eun**
**Daejeon 34122 (KR)**
• **JEONG, So Mi**
**Daejeon 34122 (KR)**
• **LEE, Yong Hyeok**
**Seoul 03722 (KR)**
• **SEO, Ji Young**
**Seoul 03722 (KR)**
• **BAE, Dong Hun**
**Daejeon 34122 (KR)**
• **BANG, Ji Hyun**
**Daejeon 34122 (KR)**

(74) Representative: **Hoffmann Eitle**
**Patent- und Rechtsanwälte PartmbB**
**Arabellastraße 30**
**81925 München (DE)**

(54) **SEPARATOR FOR ELECTROCHEMICAL DEVICES AND METHOD FOR MANUFACTURING SAME SEPARATOR**

(57)    The present disclosure is a method for manufacturing a separator for an electrochemical device, including a silicon-based negative electrode, the method including a step of forming a freestanding porous separator by simultaneously electrospinning a first spinning solution containing a polymer binder and a second spinning solution containing inorganic particles, wherein the flow rate of the second spinning solution is allowed to be greater than that of the first spinning solution so that a separator having compression resistance against expansion of the silicon-based negative electrode during charging and discharging can be manufactured.

EP 4 478 517 A1

Fig. 1

**Description**

**BACKGROUND**

Field

The present disclosure claims the benefits of the filing dates of Korean Patent Application No. 10-2022-0083685 filed with the Korean Intellectual Property Office on July 7, 2022 and Korean Patent Application No. 10-2022-0107931 filed with the Korean Intellectual Property Office on August 26, 2022, and the entire contents thereof are included in the present disclosure.

The present disclosure relates to a method for manufacturing a separator for an electrochemical device, including a silicon-based negative electrode, and a separator for an electrochemical device manufactured thereby.

Related Art

An electrochemical device converts chemical energy into electrical energy using an electrochemical reaction. Recently, lithium secondary batteries that have high energy density and voltage, have long cycle life, and are usable in various fields have been widely used.

The lithium secondary batteries may include an electrode assembly manufactured of a positive electrode, a negative electrode, and a separator disposed between the positive electrode and the negative electrode, and the electrode assembly may be manufactured by being accommodated in a case along with an electrolyte. The positive electrode may provide lithium ions, and the lithium ions may pass through a separator made of a porous material and move to the negative electrode. The negative electrode preferably has an electrochemical reaction potential close to that of lithium metal and is capable of intercalating and deintercalating lithium ions. A negative electrode including a carbon-based active material such as graphite has advantages in that it is stable and exhibits excellent cycle life since there is a small change in crystal structure due to intercalation and deintercalation of lithium ions.

Recently, as demand for lithium secondary batteries having larger capacity and higher energy density such as electric vehicles and energy storage devices has increased, the development of non-carbon based active materials using silicon, etc., with higher capacity than carbon-based active materials has been made. However, since the volume of the lithium secondary batteries including a silicon-based negative electrode rapidly expands during the charging process, the separator may be deformed as charging and discharging are repeated, and deformation or damage to the separator may lead to poor insulation or degeneration of lifespan of the lithium secondary batteries.

Therefore, research is being conducted on a separator having compression resistance that does not cause deformation even when the negative electrode expands in an electrochemical device using a silicon-based negative electrode.

**SUMMARY**

**Technical problem to be solved**

An object of the present disclosure is to provide a separator having a structure that is not deformed or damaged even when compressed by a negative electrode that expands during charging in an electrochemical device including a silicon-based negative electrode, a method for manufacturing the separator, and an electrochemical device including the separator.

Furthermore, an object of the present disclosure is to provide a separator having a structure capable of preventing a short circuit of an electrode when an electrochemical device including a silicon-based negative electrode is exposed to high temperatures, a method for manufacturing the separator, and an electrochemical device including the separator.

**Technical means for solving the technical problem**

One aspect of the present disclosure provides a separator for an electrochemical device, including a silicon-based negative electrode, wherein the separator is a freestanding porous separator that does not contain a polyolefin substrate, and includes a polymer binder and inorganic particles, and the content of the inorganic particles is greater than the content of the polymer binder based on the total weight of the separator.

The separator may include 60 to 95% by weight of the inorganic particles based on the total weight of the separator.

The separator may satisfy a thickness of 15 to 45 $\mu$m, and have a value defined by Equation 1 below of 1 to 18%:

[Equation 1]

$$(T1 - T2) / T1 \times 100$$

In Equation 1,

T1 is an initial thickness of the separator, and
T2 means a thickness after pressing the separator at 5.2 MPa and 70°C for 10 seconds with a surface rolling mill.

The separator may further include a second layer formed on at least one surface of the separator, the second layer may include a polymer resin different from the polymer binder, and the polymer binder may have a higher melting point than the polymer resin.

The separator may satisfy a thickness of 10 to 45 $\mu$m, and may have an air permeability change rate of less than 100% when pressurized at 80°C and a pressure of 7.8 MPa for 10 seconds.

Another aspect of the present disclosure provides an electrochemical device including a positive electrode, a silicon-based negative electrode, and the separator for an electrochemical device according to one aspect, which is positioned between the positive electrode and the silicon-based negative electrode.

The silicon-based negative electrode may include one or more silicon-based active materials selected from the group consisting of Si, $SiO_x$ (0<x<2), SiC, and Si alloys.

Another aspect of the present disclosure provides a method for manufacturing a separator for an electrochemical device, including a silicon-based negative electrode, the method including a step of forming a freestanding porous separator by simultaneously electrospinning a first spinning solution containing a polymer binder and a second spinning solution containing inorganic particles, wherein the second spinning solution has a flow rate greater than that of the first spinning solution.

The inorganic particles may be one or more selected from the group consisting of $SiO_2$, $Al_2O_3$, AlOOH, $TiO_2$, $ZrO_2$, $BaSO_4$, $BaTiO_3$, ZnO, MgO, $Mg(OH)_2$, $Al(OH)_3$, $Pb(Zr,Ti)O_3$, $Pb(Mg_{1/3}Nb_{2/3})O_3$-$PbTiO_3$(PMN-PT), $HfO_2$, $SrTiO_3$, $SnO_2$, $CeO_2$, MgO, NiO, CaO, $Y_2O_3$, SiC, $ZnSn(OH)_6$, $Zn_2SnO_4$, $ZnSnO_3$, $Sb_2O_3$, $Sb_2O_4$, and $Sb_2O_5$.

The polymer binder may be one or more selected from the group consisting of polyethylene terephthalate, polybutylene terephthalate, polyamide, polyimide, polyetherimide, polyacrylonitrile, polyvinyl alcohol, polyaramid, and polystyrene.

The step of forming the freestanding porous separator may be electrospinning the first spinning solution and the second spinning solution at a flow rate ratio of 1:8 to 1:100.

The method for manufacturing a separator for an electrochemical device may further include a step of pressurizing the formed freestanding porous separator at 25 to 60°C.

The method for manufacturing a separator for an electrochemical device may further include a step of forming a second layer by electrospinning a third spinning solution containing a polymer resin on at least one surface of the porous separator, wherein the polymer binder may have a higher melting point than the polymer resin.

The second layer may be formed by being disposed on the porous separator and rolled.

The rolling may be performed at a temperature lower than the melting point of the polymer resin.

The polymer resin may be one or more selected from the group consisting of polyvinylidene fluoride, polyvinylidene fluoride-hexafluoropropylene, polyethylene glycol, polypropylene glycol, polyethylene oxide, and polymethyl methacrylate.

**Technical effects**

The separator for an electrochemical device according to the present disclosure satisfies a thickness of 15 to 45 $\mu$m, has a value defined by Equation 1 above of 1 to 18% or less, and has a resistance rise rate of 50% or less after compression, and the separator is not deformed or damaged even when the separator is compressed according to the expansion of the negative electrode containing a silicon-based active material.

Further, the separator for an electrochemical device according to the present disclosure further includes a second layer having a lower melting point than the porous separator including a polymer binder and inorganic particles so that when the electrochemical device is exposed to high temperatures, the pores of the second layer can be allowed to be closed to prevent short circuit of the electrodes.

Therefore, the electrochemical device including the separator can provide improved capacity and energy density according to the use of a silicon-based negative electrode, and can provide stable cycle characteristics at the same time.

**BRIEF DESCRIPTION OF THE DRAWINGS**

FIG. 1 is a graph showing charge and discharge efficiency (Coulombic efficiency) of pouch cells according to Example 1 and Comparative Example 3 in Experimental Example 2 of the present disclosure according to charge and discharge cycles.

FIG. 2 is a graph showing areal capacity of pouch cells according to Example 1 and Comparative Example 3 in Experimental Example 2 of the present disclosure according to charge and discharge cycles.

FIG. 3 is a graph showing thicknesses before and after compression of the separators according to Manufacturing Example 1 and Comparative Example 3 in Experimental Example 3 of the present disclosure.

FIG. 4 is graphs showing (a) ion conductivity of the separator according to Manufacturing Example 1 and (b) ion conductivity of the separator according to Comparative Example 3 in Experimental Example 3 of the present disclosure.

FIG. 5 is, in Experimental Example 3 of the present disclosure, (a) an SEM image of a separator according to Manufacturing Example 1 before pressurization, (b) an SEM image of a separator according to Manufacturing Example 1 after pressurization, (c) an SEM image of a separator according to Comparative Example 3 before pressurization, and (d) an SEM image a separator according to Comparative Example 3 after pressurization.

FIG. 6 is a graph showing air permeability before and after compression of the separators according to Manufacturing Examples 5 to 7 in the Experimental Examples of the present disclosure.

**DESCRIPTION OF EXEMPLARY EMBODIMENTS**

Hereinafter, each configuration of the present disclosure will be described in more detail so that those skilled in the art to which the present disclosure pertains can easily practice it, but this is only one example, and the scope of rights of the present disclosure is not limited by the following contents.

The term "include" used in the present specification is used when listing materials, compositions, devices, and methods useful in the present disclosure and is not limited to the listed examples.

"About" and "substantially" used in the present specification are used as a range of values or degrees or a meaning close thereto, taking into account of inherent manufacturing and material tolerances, and are used to prevent unfair use by infringers of the disclosed contents in which exact or absolute values provided to help understanding of the present disclosure are mentioned.

"The electrochemical device" used in the present specification may mean a primary battery, a secondary battery, a super capacitor, and the like.

"The particle diameter" used in the present specification means D50, which is a particle diameter corresponding to 50% of the cumulative distribution of the number of particles according to the particle diameter, unless otherwise specified.

"The molecular weight" used in the present specification means a weight average molecular weight (Mw) unless otherwise specified, and the weight average molecular weight corresponds to the molecular weight in terms of polystyrene measured by gel permeation chromatography (GPC) using a monodisperse polystyrene polymer as a standard substance.

One embodiment of the present disclosure provides a method for manufacturing a separator for an electrochemical device, including a silicon-based negative electrode, the method including a step of forming a freestanding porous separator by electrospinning a first spinning solution containing a polymer binder and a second spinning solution containing inorganic particles at the same time.

A conventional porous separator forms a coating layer containing inorganic particles and a polymer binder on at least one surface of a porous substrate, and the porous substrate used a polyolefin substrate or nonwoven fabric prepared through a dry or wet process. The freestanding porous separator refers to a separator in which a pore structure is formed using inorganic particles and a polymer binder without a porous substrate as described above. Separators that do not include a porous substrate may be vulnerable to external forces and have low compression resistance as their external shape is formed only with inorganic particles and a polymer binder.

One embodiment of the present disclosure provides a freestanding porous separator having excellent compression resistance by configuring a high content of inorganic particles compared to a binder without using a polyolefin substrate. Specifically, in one embodiment of the present disclosure, the second spinning solution has a flow rate greater than that of the first spinning solution in the step of forming the freestanding porous separator.

Compression resistance may be expressed as a resistance rise rate or thickness ratio before and after pressurizing the separator under predetermined conditions. Excellent compression resistance means that lithium ions may move smoothly by maintaining the original pore structure even if the separator is pressurized due to low compression resistance. In addition, excellent compression resistance means that durability against external force is excellent so that deformation or damage of the separator is minimized or does not occur.

In one embodiment of the present disclosure, a relatively small amount of a polymer binder may be used compared to other manufacturing methods such as die coating, bar coating, dip coating, and roll coating by manufacturing a freestanding porous separator by electrospinning. Through this, it may be possible to manufacture a separator having a relatively high inorganic particle content while reducing the content of the polymer binder. At the same time, electrospinning may achieve a uniform distribution of inorganic particles compared to other manufacturing methods so that it is suitable for manufacturing a separator with physical properties suitable for use in an electrochemical device including a silicon-based negative electrode.

The silicon-based negative electrode may include one or more silicon-based active materials selected from the group consisting of Si, $SiO_x$ (0<x<2), SiC, and Si alloys. For example, the Si alloys may include a LiSi alloy, a CoSi alloy, or a TiSi alloy. Preferably, the silicon-based active material may include 50% by weight or more of pure Si based on the total weight. More preferably, the silicon-based active material may be made of only pure Si.

Electrospinning may be performed by applying a voltage between a nozzle through which a polymer solution is discharged and a collector on which the polymer solution discharged from the nozzle is collected. The nozzle may be connected to a container such as a syringe or the like storing the polymer solution to receive the polymer solution at a predetermined flow rate. The nozzle may be charged with positive or negative charges, and the collector may be charged with a charge opposite to that of the nozzle or may be grounded. For example, the collector may be a flat plate made of a metal material that collects the polymer solution being spun in the form of fibers, but the shape or size thereof is not limited.

First, droplets of a polymer maintained by surface tension may form at the end of the nozzle. At this time, when a high voltage of about 10 to 30 kV is applied to the nozzle, the Coulomb's force due to the external electric field may become greater than the surface tension of the polymer droplets, and the polymer droplets may exhibit a Taylor cone shape. Preferably, a high voltage of about 12 to 18 kV is applied to the nozzle so that a jet of polymer fibers may be spun and stretched from the Taylor cone-shaped polymer droplets, and the polymer fibers may move in the direction of the collector and may be collected, and then solidified.

The step of forming the freestanding porous separator includes preparing a first spinning solution containing a polymer binder. The first spinning solution may be a polymer binder solution in which a polymer binder is dissolved in a solvent.

The polymer binder may be a polymer having a molecular weight of 100,000 to 200,000, preferably 120,000 to 180,000, and more preferably 140,000 to 160,000. If the molecular weight of the polymer binder is lower than the above-described range, electrospinning cannot be performed in a state in which the shape of the fiber is maintained. If the molecular weight of the polymer binder is higher than the above-described range, the viscosity of the second spinning solution increases so that smooth electrospinning cannot be performed.

The polymer binder may be one or more selected from the group consisting of polyethylene terephthalate (PET), polybutylene terephthalate, polyamide, polyimide, polyetherimide, polyacrylonitrile (PAN), polyvinyl alcohol (PVA), polyaramid, and polystyrene. Preferably, the polymer binder may be a polymer having excellent heat resistance at 150 to 200°C, may have excellent thermal stability of a separator manufactured, and may prevent internal short circuit of the electrochemical device. More preferably, the polymer binder may be one or more selected from the group consisting of polyethylene terephthalate, polyacrylonitrile, and polyphenylene oxide.

The solvent may be one or more organic solvents such as alcohol, acetone, dimethylacetamide (DMAc), dimethylformamide (DMF), and methylenechloride, but is not limited thereto. The solvent may be one which evaporates after the step of forming the freestanding porous separator so that it does not remain in the separator.

The first spinning solution may include about 5 to 20% by weight of the polymer binder based on the total weight. Preferably, the polymer binder may have a content of about 5 to 12% by weight. More preferably, the polymer binder may have a content of about 8 to 10% by weight. If the content of the polymer binder is lower than the above-described range, the viscosity of the second spinning solution is lowered, and thus the fiber shape cannot be maintained during electrospinning. If the content of the polymer binder is higher than the above-described range, the viscosity of the first spinning solution increases, and thus smooth electrospinning cannot be performed.

The step of forming the freestanding porous separator includes preparing a second spinning solution containing inorganic particles. The second spinning solution may be a dispersion of inorganic particles in which inorganic particles are mixed with a dispersion medium.

The inorganic particles may be inorganic nanoparticles having an average particle diameter (D50) of 10 to 1,000 nm, preferably 10 to 500 nm, and more preferably 200 to 300 nm. The inorganic particles may be connected to and fixed to adjacent inorganic particles by a polymer binder to be described later, and an interstitial volume between the inorganic particles may be formed as pores of the separator. When the average particle diameter of the inorganic particles is included in the above-described range, uniform pores may be formed in the separator. A separator having more uniform pores may facilitate the movement of lithium ions and increase the impregnation rate of the electrolyte, thereby contributing to improved battery performance.

The inorganic particles may include one or more selected from the group consisting of $SiO_2$, $Al_2O_3$, AlOOH, $TiO_2$, $ZrO_2$, $BaSO_4$, $BaTiO_3$, ZnO, MgO, $Mg(OH)_2$, $Al(OH)_3$, $Pb(Zr,Ti)O_3$, $Pb(Mg_{1/3}Nb_{2/3})O_3$-$PbTiO_3$(PMN-PT), $HfO_2$, $SrTiO_3$, $SnO_2$, $CeO_2$, MgO, NiO, CaO, $Y_2O_3$, SiC, $ZnSn(OH)_6$, $Zn_2SnO_4$, $ZnSnO_3$, $Sb_2O_3$, $Sb_2O_4$, and $Sb_2O_5$. The inorganic materials are electrochemically stable, and thus no chemical reaction may occur within the operating voltage range of the electrochemical device. Preferably, the inorganic materials may be one or more selected from the group consisting of $SiO_2$, $Al_2O_3$, AlOOH, $TiO_2$, $ZrO_2$, and $Al(OH)_3$.

The dispersion may be a colloidal solution formed by mixing the inorganic particles and the dispersion medium. The dispersion medium may be water, alcohol, or the like that does not substantially dissolve the inorganic particles, but is not limited thereto. The dispersion medium may evaporate after the step of forming the freestanding porous separator and not remain in the separator.

The second spinning solution may include about 5 to 15% by weight of the inorganic particles with respect to the total weight. Preferably, the inorganic particles may have a content of about 8 to 12% by weight. The inorganic particles may exhibit uniform dispersibility in the dispersion medium within the above-described content range, and may achieve uniform distribution of inorganic materials in the separator.

The second spinning solution may have viscosity by further including a polymer in addition to the inorganic particles. The polymer may be one or more polymers usable as a polymer binder in the present disclosure, but may be different from the polymer binder used in the second spinning solution.

The preparation of the first spinning solution and the preparation of the second spinning solution may be performed at the same time or at different times regardless of the order.

The step of forming a freestanding porous separator forms a freestanding porous separator by electrospinning the first spinning solution and the second spinning solution at the same time. In one embodiment of the present disclosure, a freestanding porous separator in which inorganic particles are uniformly dispersed may be manufactured by preparing a first spinning solution containing a polymer binder and a second spinning solution containing inorganic particles, respectively, and simultaneously electrospinning them. It is difficult for a single spinning solution to satisfy all conditions of (i) it should have an appropriate boiling point considering evaporation after spinning, (ii) it should be usable for electrospinning, (iii) it should dissolve polymer binders well, and (iv) it should disperse inorganic particles well. The simultaneous electrospinning of the first spinning solution and the second spinning solution may simultaneously satisfy the above-described conditions (i) to (iv), and as a result, a porous separator in which inorganic particles are uniformly dispersed without a separate dispersant may be manufactured.

The first spinning solution and the second spinning solution may be each stored in a container equipped with a nozzle and then electrospun with respect to one collector. For example, the container may be a syringe, and an injection flow rate of the syringe in which the first spinning solution is stored may be greater than an injection flow rate of the syringe in which the second spinning solution is stored. The electrospinning method of the first spinning solution and the second spinning solution is not limited as long as the inorganic particles and the polymer binder may be allowed to be uniformly distributed in a separator manufactured. Preferably, the first spinning solution and the second spinning solution may be well mixed with each other on the collector, and spun to become a flat plate shape.

The first spinning solution and the second spinning solution may be electrospun at a flow rate ratio of 1:8 to 1:100. For example, the first spinning solution may be electrospun at a flow rate of 1 to 10 $\mu$l/min. The second spinning solution may be electrospun at a flow rate of 80 to 100 $\mu$l/min. When the above-described flow rate ratio is satisfied, the separator manufactured may secure sufficient compression resistance and be applied to an electrochemical device using a silicon-based negative electrode.

The first spinning solution and the second spinning solution may be spun in the form of fibers and collected on the collector. The method for manufacturing a separator may further include a step of leaving the freestanding porous separator at room temperature or drying it in an oven at a temperature of room temperature to 60°C after the step of forming the freestanding porous separator to evaporate and remove the solvent and dispersion remaining without evaporation during the electrospinning process.

The method for manufacturing a separator for an electrochemical device may further include a step of pressurizing the separator formed in the step of forming the freestanding porous separator at 25 to 60°C.

The step of pressurizing the separator may be rolling the formed separator at a rolling rate of 10 to 50% and then rolling the separator to a thickness of 15 to 45 $\mu$m using a rolling mill. If the rolling temperature, pressure, and rolling rate are out of the above-described ranges, inorganic particles included in the separator may be destroyed. The rolling mill may be a roll mill in which a separator is rolled by injecting it while upper and lower rolls are rotating. Preferably, in the step of pressurizing the separator, the separator may have a thickness of 20 to 40 $\mu$m after rolling by rolling the separator at 25 to 40% using a rolling mill.

The separator for an electrochemical device manufactured according to the method as described above is a freestanding porous separator that does not form a coating layer containing inorganic particles and a polymer binder on a porous substrate, and the content of inorganic particles is high compared to the polymer binder, and the inorganic particles are uniformly dispersed in the separator. The separator does not undergo deformation or damage even when the negative electrode including the silicon-based active material expands, and has excellent compression resistance so that the resistance rise rate may be maintained at 50% or less even after repeated charging and discharging of the electrochemical device.

The method for manufacturing a separator for an electrochemical device may further include a step of forming a second layer by electrospinning a third spinning solution containing a polymer resin on at least one surface of the freestanding porous separator. The freestanding porous separator may be a first layer, and a second layer including the polymer resin may be stacked on at least one surface of the first layer.

The third spinning solution may be a polymer solution in which the polymer resin is dissolved in a solvent. The polymer resin may be different from the polymer binder, and the polymer binder may have a higher melting point than the polymer resin.

The polymer resin may be a polymer having a molecular weight of 10,000 to 200,000, preferably 12,000 to 100,000, and more preferably 15,000 to 20,000. If the molecular weight of the polymer resin is lower than the above-described range, electrospinning cannot be performed in a state in which the shape of the fiber is maintained. If the molecular weight of the polymer resin is higher than the above-described range, the viscosity of the third spinning solution increases so that smooth electrospinning cannot be performed.

The polymer resin may be one or more selected from the group consisting of polyvinylidene fluoride, polyvinylidene fluoride-hexafluoropropylene, polyethylene glycol, polypropylene glycol, polyethylene oxide, and polymethyl methacrylate.

The solvent may be one or more organic solvents such as alcohol, acetone, dimethylacetamide (DMAc), dimethylformamide (DMF), and methylenechloride, but is not limited thereto. The solvent may evaporate after the step of forming the second layer and not remain in the separator.

The third spinning solution may include about 5 to 20% by weight of the polymer resin based on the total weight. Preferably, the polymer resin may have a content of about 5 to 12% by weight. More preferably, the polymer resin may have a content of about 8 to 10% by weight. If the content of the polymer resin is lower than the above-described range, the viscosity of the third spinning solution is lowered, and thus the fiber shape cannot be maintained during electrospinning. If the content of the polymer resin is higher than the above-described range, the viscosity of the third spinning solution increases, and thus smooth electrospinning cannot be performed.

The preparation of the third spinning solution may be performed at the same time as the preparation of the first and second spinning solutions, or at different times regardless of the order.

The third spinning solution may be stored in a container equipped with a nozzle and then electrospun with respect to the collector. The third spinning solution may have a flow rate equal to or higher than that of the first spinning solution.

The third spinning solution may be spun in the form of fibers and collected on the collector. The step of forming of the second layer may further include a step of leaving it at room temperature or drying it in an oven at a temperature of room temperature to 60°C after electrospinning to evaporate and remove the solvent without evaporation during the electrospinning process. A pore structure may be formed in the second layer during the electrospinning of the third spinning solution and the evaporation of the solvent.

The polymer resin may have a melting point lower than that of the polymer binder, and the second layer may have a melting point lower than that of the first layer. The second layer may function as a shutdown layer in the separator. For example, when the temperature of the second layer becomes higher than a predetermined temperature as a large current suddenly flows due to a short circuit in an electrochemical device, the pore structure of the second layer is first shut down, and thus a short circuit of the electrode and an additional temperature rise may be prevented.

The step of stacking the second layer on the first layer may be rolling the second layer and the first layer. The rolling may be performed at a temperature lower than the melting point of the polymer resin. The rolling may adhere the second layer and the first layer while not closing the pore structure of the second layer. The rolling may use a roll mill that rolls it by injecting the separator while the upper and lower rolls are rotating.

The separator for an electrochemical device manufactured according to the method as described above is a freestanding porous separator that does not include a porous substrate and includes a first layer including a polymer binder and inorganic particles and a second layer including a polymer resin. The first layer has a high content of inorganic particles compared to the polymer binder based on the total weight of the first layer, and has the inorganic particles uniformly dispersed therein. The separator including the first layer is not deformed or damaged even when the negative electrode including the silicon-based active material is expanded, and has excellent compression resistance so that even when charging and discharging of the electrochemical device is repeated, the rate of change in air permeability is shown to be low. The second layer includes a polymer resin having a melting point lower than that of the polymer binder of the first layer so that when the electrochemical device is exposed to a temperature higher than a predetermined temperature, the second layer is first shut down, and thus a short circuit of the electrode may be prevented.

Another embodiment of the present disclosure provides a separator for an electrochemical device, including a silicon-based negative electrode. The separator is a freestanding porous separator that does not include a polyolefin substrate, and includes a polymer binder and inorganic particles, but the content of the inorganic particles is greater than that of the polymer binder based on the total weight of the separator. The separator may be manufactured according to the above description and the method for manufacturing a separator according to the previous embodiment, and the same description as in the previous embodiment is replaced with the description of the above-described embodiment.

The separator is manufactured by electrospinning a first spinning solution containing a polymer binder and a second spinning solution containing inorganic particles at the same time. The contents of the polymer binder and inorganic particles included in the separator may be adjusted by adjusting the flow rates of the first spinning solution and the second spinning solution during electrospinning. When manufacturing the separator, the electrospinning flow rate of the second spinning solution is made to be greater than the electrospinning flow rate of the first spinning solution so that a separator having a content of the inorganic particles greater than that of the polymer binder based on the total weight of the separator may be manufactured. Specifically, the separator may include 60 to 95% by weight of the inorganic material based on the total weight of the separator. Preferably, the separator may include 85 to 95% by weight of the inorganic material based on the total weight. When the content of the inorganic material is within the above-described range, the separator may provide compression resistance usable in an electrochemical device using a silicon-based negative electrode.

The separator may have a thickness of 15 to 45 $\mu$m. Preferably, the separator may have a thickness of 20 to 40 $\mu$m. When the thickness of the separator is within the above-described range, deformation or damage to the separator due to expansion of a negative electrode including a silicon-based active material may be minimized. If the thickness of the separator is lower than the above-described range, the separator may be damaged due to expansion of the separator. If the thickness of the separator is higher than the above-described range, the movement of lithium ions through the separator becomes difficult.

The separator may have a resistance rise rate of 50% or less before and after compression. For example, when the separator is compressed for 10 seconds at conditions of 70°C and 5.2 MPa using a surface rolling mill (Rhotec, pressing machine, V-30), the change in resistance before and after compression may be within 0.01 to 1 Ohm.

The separator may have a thickness change rate of 18% or less before and after compression defined by Equation 1 below. Preferably, the separator may have a thickness change rate of 1 to 18% before and after compression. More preferably, the thickness change rate before and after compression may be 1 to 15%.

$$[Equation\ 1]$$

$$(T1 - T2) / T1 \times 100$$

In Equation 1,

T1 is an initial thickness of the separator, and
T2 means a thickness after pressing the separator at 5.2 MPa and 70°C for 10 seconds in a surface rolling mill (Rhotec pressing machine V-30).

A separator satisfying the resistance rise rate or thickness change rate range maintains a pore structure before and after pressurization, enabling smooth movement of lithium ions, and even if a negative electrode containing a silicon-based active material expands, deformation or damage to the separator may be minimized or not occur.

The separator may not substantially undergo dimensional change at a high temperature of 150°C or higher, and may have a volume change rate of 1.5% or less.

The separator may have pores with an average size of 500 to 1,000 nm, and have a porosity of 50 to 60%. The separator may have a porosity that is shown to have an air permeability of 100 sec/100cc or less.

The separator may be a two-layer structure separator further including a second layer formed on at least one surface of the separator. The second layer may include a polymer resin different from the polymer binder, and the polymer binder may have a higher melting point than the polymer resin.

The separator may include a plurality of first layers or second layers.

The first layer and the second layer may have a thickness ratio of 3:1 to 9:1. The shutdown function of the second layer may be secured while preventing damage to the separator due to expansion of the negative electrode within the above-described range.

The compression resistance of the separator may be evaluated by the rate of change in air permeability (Gurley) values before and after compression. For example, when the separator is compressed using a surface rolling mill at conditions of 80°C and 7.8 MPa for 10 seconds, the rate of change in air permeabilities before and after compression may be less than 100%.

A separator satisfying the air permeability change rate range as described above maintains a pore structure before and after pressurization, enabling smooth movement of lithium ions, and even when a negative electrode containing a silicon-based active material expands, deformation or damage to the separator may be minimized or not occur.

Another embodiment of the present disclosure provides an electrochemical device including a positive electrode, a silicon-based negative electrode, and a separator as described above. For example, the electrochemical device may be a lithium secondary battery including a positive electrode providing lithium ions. The electrochemical device may further include an electrolyte.

The positive electrode and the silicon-based negative electrode may be obtained by applying and drying an active material on at least one surface of each current collector. The silicon-based negative electrode may use the above-described active material.

For example, the positive electrode active material may include: lithium cobalt oxide ($LiCoO_2$); lithium nickel oxide ($LiNiO_2$); lithium manganese oxides such as the formula $Li_{1+x}Mn_{2-x}O_4$ (where x is 0 to 0.33), $LiMnO_3$, $LiMn_2O_3$, $LiMnO_2$, etc.; lithium copper oxide ($Li_2CuO_2$); vanadium oxides such as $LiVsOs$, $LiFe_3O_4$, $V_2O_5$, $Cu_2V_2O_7$, etc.; Ni site-type lithium nickel oxide represented by the formula $LiNi_{1-x}M_xO_2$ (where M = Co, Mn, Al, Cu, Fe, Mg, B, or Ga, and x = 0.01 to 0.3); lithium manganese composite oxide represented by the formula $LiMn_{2-x}M_xO_2$ (where M = Co, Ni, Fe, Cr, Zn, or Ta, and x = 0.01 to 0.1) or $Li_2Mn_3MO_8$ (where M = Fe, Co, Ni, Cu, or Zn); $LiMn_2O_4$ in which Li part of the formula is substituted with an alkaline earth metal ion; disulfide compounds; and $Fe_2(MoO_4)_3$, but is not limited thereto.

A material having conductivity without causing chemical change in the electrochemical device may be used in the current collector. For example, a current collector for a positive electrode may include aluminum, nickel, titanium, fired carbon, stainless steel; or the surface of aluminum or stainless steel which is surface-treated with carbon, nickel, titanium, silver, or the like, but is not limited thereto. For example, a current collector for a negative electrode may include copper, nickel, titanium, fired carbon, stainless steel; or the surface of copper or stainless steel which is surface-treated with carbon, nickel, titanium, silver, or the like, but is not limited thereto. The current collector may be in various forms such as a thin metal plate, a film, a foil, a net, a porous body, and a foam.

The electrolyte may be a non-aqueous electrolyte containing a lithium salt, and may include a lithium salt and a non-aqueous organic solvent, an organic solid electrolyte, an inorganic solid electrolyte, and the like.

Examples of the non-aqueous organic solvent may include an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydroxy franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triesters, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, or ethyl propionate.

Examples of the organic solid electrolyte may include polyethylene derivatives, polyethylene oxide derivatives, polypropylene oxide derivatives, phosphoric acid ester polymers, poly agitation lysine, polyester sulfide, polyvinyl alcohol, polyvinylidene fluoride, a polymer containing an ionic dissociation group, etc.

Examples of the inorganic solid electrolyte may include nitrides, halides, and sulfates of Li such as $Li_3N$, LiI, $Li_5NI_2$, $Li_3NLiI$-LiOH, $LiSiO_4$, $LiSiO_4$-LiI-LiOH, $Li_2SiS_3$, $Li_4SiO_4$, $Li_4SiO_4$-LiI-LiOH, $Li_3PO_4$-$Li_2S$-$SiS_2$, etc.

The lithium salt is a material that is easily soluble in the non-aqueous electrolyte, and examples thereof may include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, chloroborane lithium, lithium lower aliphatic carboxylate, lithium tetraphenylborate, imide, etc.

The electrochemical device may be manufactured by inserting a positive electrode, a negative electrode, a separator, and an electrolyte into a case or pouch and sealing it. For example, the electrochemical device may be a cylindrical, prismatic, coin-type, or pouch-type lithium secondary battery. Preferably, the electrochemical device may be a cylindrical or pouch-type lithium secondary battery.

The lithium secondary battery is packed or modularized as a unit cell, and may be used in small devices such as a computer, a mobile phone, a power tool, and the like, and power tools which receive a power and are moved by an electronic motor; electric cars including electric vehicles (EVs), hybrid electric vehicles (HEVs), plug-in hybrid electric vehicles (PHEVs), and the like; electric two-wheeled vehicles including electric bicycles (E-bikes) and electric scooters (E-scooters); electric golf carts; and medium and large devices such as power storage systems and the like.

Hereinafter, the present disclosure will be described in more detail through specific Examples and Experimental Examples. The following Examples and Experimental Examples are intended to illustrate the present disclosure, but the present disclosure is not limited by the following Examples and Experimental Examples.

**Manufacturing Example 1**

Manufacture of separator

As a binder, 1.8 g of polyacrylonitrile (PAN) having a weight average molecular weight of 150,000 was injected into 18.2 g of dimethylformamide (DMF), and then stirred at 70°C and at a condition of 250 rpm to prepare a first spinning solution, which is a solution of the binder. The first spinning solution was injected into a 10 mL first syringe connected with a nozzle.

2.0 g of alumina ($Al_2O_3$) having an average particle diameter (D50) of 450 nm as an inorganic material was injected into 5.4 g of n-butanol and 12.6 g of acetone, and then dispersed by bead milling for 1 hour at room temperature to prepare a second spinning solution, which is a dispersion of the inorganic material. A second spinning solution was injected into a 10 mL second syringe having a nozzle connected thereto.

A collector having a size of 10 cm × 10 cm was disposed under the nozzles of the first syringe and the second syringe, and the collector was grounded. A separator was manufactured by applying a voltage of 18 kV to the nozzle and the collector of each syringe and simultaneously injecting the first syringe at 80 μl/min and the second syringe at 4.5 μl/min for about 180 minutes. Thereafter, in order to remove the remaining solvent and dispersion medium, it was dried at 60°C in a vacuum condition for 12 hours.

The separator was injected into a roll mill (Rhotec Co.) and compressed to obtain a separator having a thickness of about 30 μm.

**Manufacturing Example 2**

A separator was manufactured in the same manner as in Manufacturing Example 1 except that the first syringe was injected at 90 μl/min, and simultaneously the second syringe was injected at 4.5 μl/min.

**Manufacturing Example 3**

A separator was manufactured in the same manner as in Manufacturing Example 1 except that the first syringe was injected at 55 μl/min, and simultaneously the second syringe was injected at 4.5 μl/min.

**Manufacturing Example 4**

A separator was manufactured in the same manner as in Manufacturing Example 1 except that the first syringe was injected at 70 μl/min, and simultaneously the second syringe was injected at 4.5 μl/min.

**Manufacturing Example 5**

A separator having a thickness of about 12 μm manufactured in the same manner as in Manufacturing Example 1 was used as a first layer, and a third spinning solution was electrospun on one surface of the first layer to manufacture a separator.

Specifically, polyvinylidene fluoride-hexafluoropropylene (PVDF-HFP) having a weight average molecular weight of 400,000 and a hexafluoropropylene content of 5% by weight was injected into dimethylformamide (DMF) in an amount of 8% by weight, and stirred at 60°C and at a condition 250 rpm to prepare a third spinning solution. The third spinning solution was injected into a third syringe having a nozzle connected thereto.

The first layer prepared on the collector was disposed under the nozzle of the third syringe, and the collector was grounded. A voltage of 18 kV was applied to the nozzle of the syringe and the collector, and the third syringe was injected at 80 μl/min for about 180 minutes to prepare a second layer on the surface of the first layer. Thereafter, in order to remove the remaining solvent and dispersion medium, it was dried at 60°C and at a vacuum condition for 12 hours to obtain a separator having a thickness of about 15 μm.

**Manufacturing Example 6**

A separator having a thickness of about 15 μm was manufactured in the same manner as in Manufacturing Example 1.

**Manufacturing Example 7**

A coating slurry was prepared by dispersing inorganic particles and a polymer resin at a weight ratio of 8:2 in an acetone solution. Specifically, a mixture of alumina and boehmite was used as the inorganic particles, and a mixture of polyvinylidene fluoride-hexafluoropropylene having a hexafluoropropylene content of 8% by weight, polychlorotrifluoroethylene (CTFE), and a cyano resin was used as the polymer resin.

The coating slurry was coated on both surfaces of a polyethylene substrate having a thickness of 9 $\mu$m by dip coating to form a coating layer having a thickness of about 3 $\mu$m and dried to obtain a separator having a thickness of about 15 $\mu$m.

**Example 1**

Preparation of positive electrode

A positive electrode slurry containing lithium manganese composite oxide (NCMA), which is a positive electrode active material, was applied to an aluminum thin film, dried, and then compressed in a roll mill to prepare a positive electrode having a porosity of 26% and a capacity per unit area of 4.5 mAh/cm$^2$.

Preparation of negative electrode

A negative electrode slurry containing a carbon-based negative electrode active material was applied to a copper thin film, dried, and then compressed in a roll mill to prepare a negative electrode having a porosity of 40% and a capacity per unit area of 8.5 mAh/cm$^2$.

Preparation of electrolyte

As an organic solvent, fluoroethylene carbonate (FEC) and ethyl methyl carbonate (EMC) were mixed at a volume ratio of 3:7, and LiPF$_6$ was added to prepare an electrolyte having a LiPF$_6$ concentration of 1.0M.

Manufacture of electrochemical device

A pouch-type mono cell was manufactured as an electrochemical device using the positive electrode, the negative electrode, and the electrolyte prepared as described above, and the separator manufactured according to Manufacturing Example 1.

After the positive electrode was cut to a size of 4 $\times$ 4 cm$^2$, the upper end of 0.5 $\times$ 1 cm$^2$ was welded with an aluminum tab having a width of 1 cm. After the negative electrode was cut to a size of 4.5 $\times$ 4.5 cm$^2$, the upper end of 0.5 $\times$ 1 cm$^2$ was welded with a nickel tab having a width of 1 cm. After cutting the separator to a size of 5 $\times$ 5 cm$^2$, they were put into a pouch in the order of the positive electrode, the separator, and the negative electrode, the three corners of the pouch were sealed at 250°C to inject 250 mL of the electrolyte, and they were sealed in order under vacuum and high temperatures to manufacture a pouch cell.

**Example 2**

A pouch cell was manufactured in the same manner as in Example 1 except that the separator manufactured according to Manufacturing Example 2 was used during manufacturing of the electrochemical device.

**Comparative Example 1**

A pouch cell was manufactured in the same manner as in Example 1 except that the separator manufactured according to Manufacturing Example 3 was used during manufacturing of the electrochemical device.

**Comparative Example 2**

A pouch cell was manufactured in the same manner as in Example 1 except that the separator manufactured according to Manufacturing Example 4 was used during manufacturing of the electrochemical device.

**Comparative Example 3**

Manufacture of separator

A slurry for forming a porous coating layer was prepared by dispersing alumina and boehmite as inorganic particles, and a dispersant (polyvinylpyrrolidone) in acetone, and further adding polyvinylidene fluoride-hexafluoropropylene and chlorotrifluoroethylene as polymer binders. Alumina, boehmite, polyvinylidene fluoride-hexafluoropropylene, chlorotrifluoroethylene, and a dispersant were used at a weight ratio of 66.3: 11.7: 15.5:4.5:2.

A polyethylene porous substrate having a thickness of 15 $\mu$m was coated on both surfaces by a dip coating method using the slurry for forming a porous coating layer. The porous coating layer was formed to a thickness of 4 $\mu$m per each surface to manufacture a separator having a total thickness of 23 $\mu$m.

Manufacture of electrochemical devices

Pouch cells were manufactured in the same manner as in Example 1 except that the separator manufactured according to Comparative Example 1 was used during manufacturing of the electrochemical device.

**Experimental Example 1. Checking separator physical properties and whether cell is driven or not according to inorganic material injection speed**

When the separators according to Manufacturing Examples 1 to 4 were manufactured to the same thickness, the required rolling rate and air permeability as physical properties of the separator were checked, and the results are shown in Table 1 below.

Thickness measurement of separators

Thicknesses of the separators were measured using a thickness measuring unit (Mitutoyo, VL-50S-B).

Air permeability measurement

Air permeabilities were measuring by measuring the time it takes for 100 cc of air to pass through a separator with a diameter of 28.6 mm and an area of 645 mm$^2$ using a Gurley densometer (Gurley, 4110N).

Checking whether cells are driven or not

When the pouch cells including the separators were manufactured (Examples 1 and 2, and Comparative Examples 1 and 2), whether the pouch cells were driven or not according to the electrospinning flow rate difference of the first spinning solution was checked, and the results are shown in Table 1 below.

[Table 1]

| Classification | Electrospinning flow rate of first spinning solution ($\mu$m/min) | Thickness of separator ($\mu$m) | Rolling rate (%) | Air permeability (sec/100cc) | Whether cell is driven or not |
|---|---|---|---|---|---|
| Comparative Example 1 (Manufacturing Example 3) | 55 | 30 | 63 | 25 | × |
| Comparative Example 2 (Manufacturing Example 4) | 70 | 30 | 50 | 39 | × |
| Example 1 (Manufacturing Example 1) | 80 | 30 | 40 | 63 | ○ |
| Example 2 (Manufacturing Example 2) | 90 | 30 | 25 | 67.4 | ○ |

Referring to Table 1, it was confirmed that the separators used in Examples 1 and 2 exhibited low rolling rates and normal cell driving was possible by containing inorganic materials in an excessive amount compared to the binder. Meanwhile, it was confirmed that the separators used in Comparative Examples 1 and 2 exhibited high rolling rates and exhibited low air permeabilities, and cell driving was impossible. Such results indirectly indicate that they are results in which the pores of the separator are clogged or the uniformity thereof is lowered due to destruction of inorganic particles in the process of performing pressurization at a high rolling rate.

**Experimental Example 2. Checking charge/discharge efficiency and capacity according to cycle**

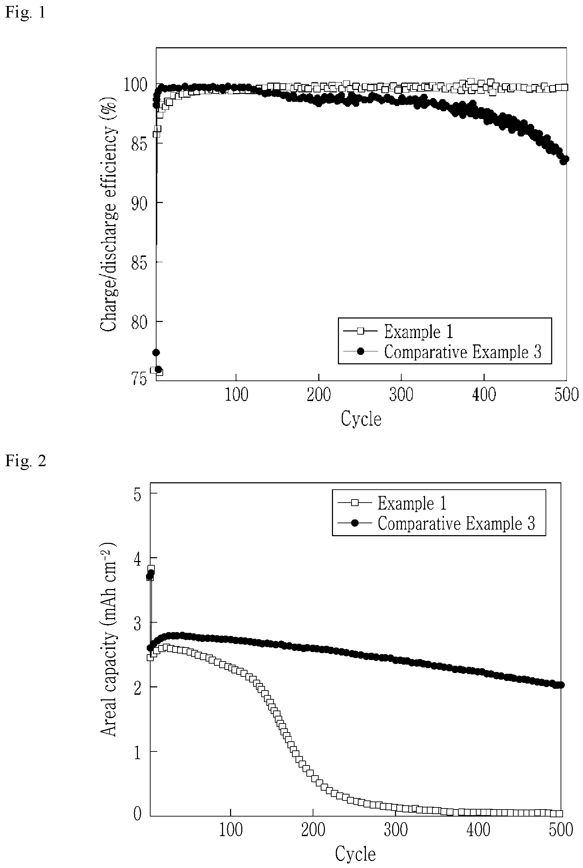

The charge and discharge efficiencies (coulombic efficiencies) and areal capacities according to the charge and discharge cycles of the pouch cells according to Example 1 and Comparative Example 3 were checked and shown in FIGS. 1 and 2, respectively.

Referring to FIG. 1, the pouch cell of Example 1 including the separator according to Manufacturing Example 1 manufactured by electrospinning did not check a decrease in charge/discharge efficiency during 500 charge/discharge cycles, but the pouch cell of Comparative Example 3 was shown to decrease by 5% or more at the 500th cycle by starting to decrease from the 200th cycle.

Referring to FIG. 2, the pouch cell of Example 1 including the separator according to Manufacturing Example 1 manufactured by electrospinning exhibited a capacity reduction rate of less than 8% during 200 charge/discharge cycles, whereas the pouch cell of Comparative Example 3 was found to be reduced by 70% or more.

Such a result is due to the deterioration of the lifespan of the pouch cell due to occurrence of deformation in the separator as the negative electrode including silicon (pure-Si) expands.

**Experimental Example 3. Checking physical properties after compression of separator**

Compression resistance evaluation

Two sheets of a PET film (35 $\mu$m) with an area of $5 \times 5$ cm$^2$ were disposed on two sheets of A4 paper, and a separator with an area of $5 \times 5$ cm$^2$ was disposed on the PET film. One sheet of the PET film (35 $\mu$m) having an area of $5 \times 5$ cm$^2$ was again disposed on the separator, and two sheets of A4 paper were disposed on the PET film. Pressure was applied to the A4 paper disposed up and down using a surface rolling mill (Rhotec, pressing machine, V-30) at conditions of 70°C and 5.2 MPa for 10 seconds.

Ionic conductivity measurement

A SUS spacer was used as a working electrode and a counter electrode, and the separators before and after compression resistance evaluation were cut into a circular shape with a diameter of 19 mm and inserted between these electrodes to manufacture coin-type cells (blocking cells), and then the ionic conductivities were measured by measuring the impedances.

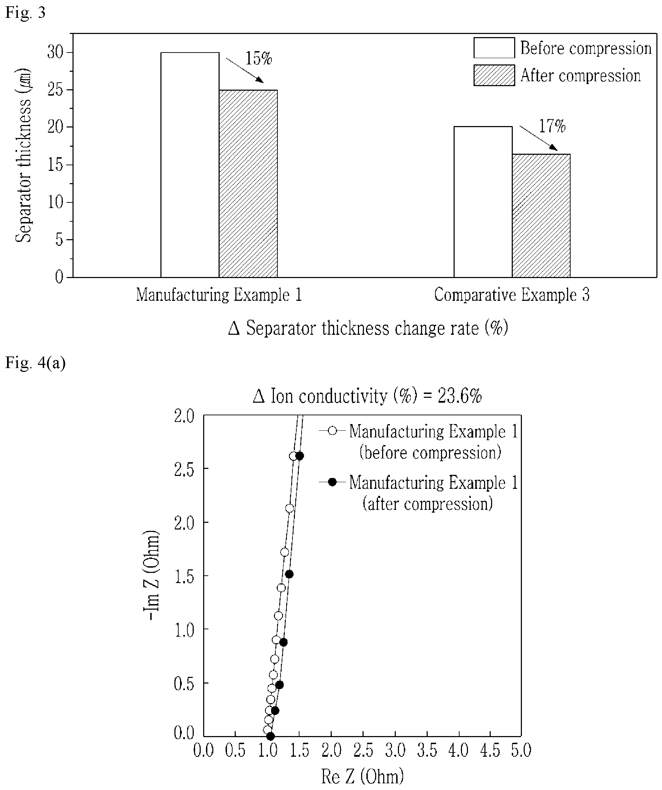

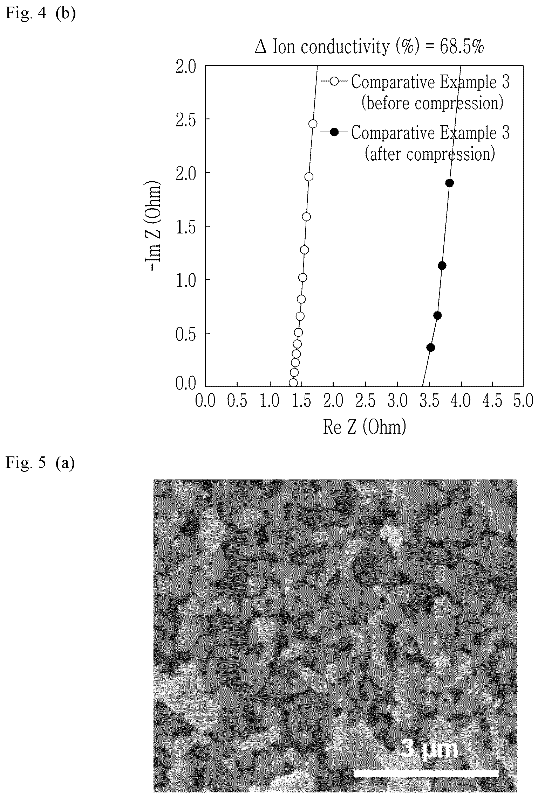

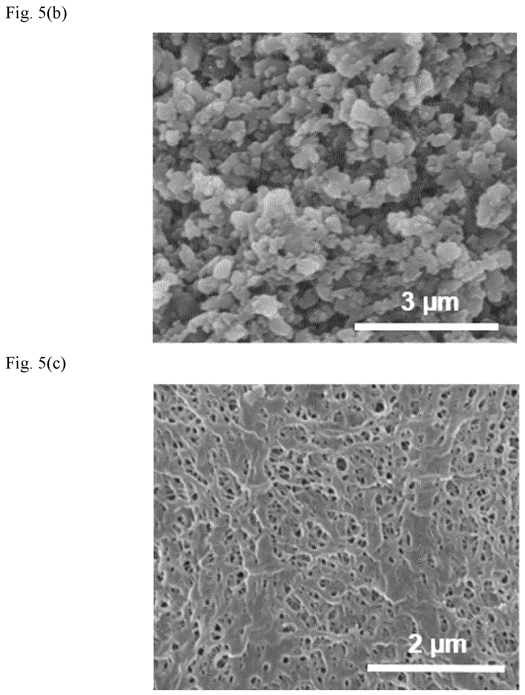

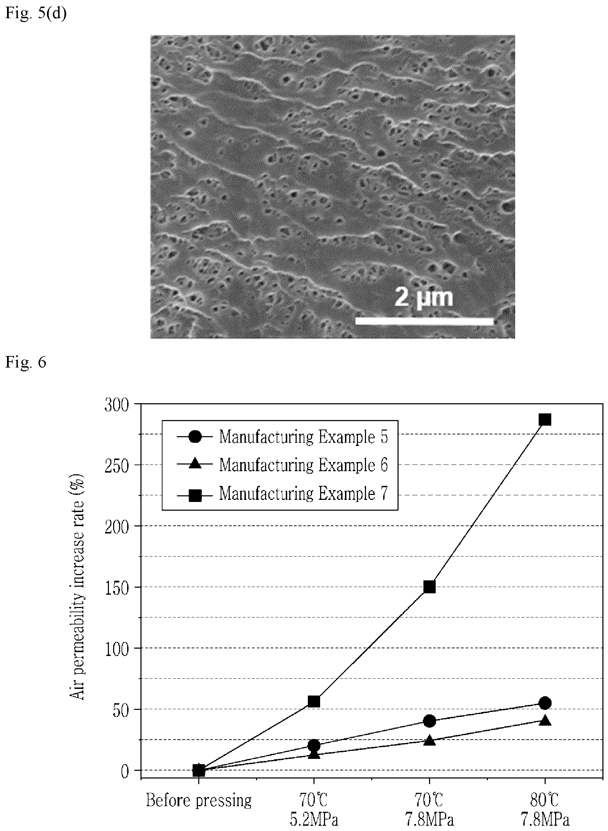

Compression resistance evaluation and ionic conductivities of the separator of Manufacturing Example 1 and the separator of Comparative Example 3 were measured, and the results are shown in FIGS. 3 and 4, respectively. SEM images (x20K, 10kV) before and after compression resistance evaluation of the separator of Manufacturing Example 1 and the separator of Comparative Example 3 are shown in FIG. 5.

Referring to FIG. 3, it was shown that the thickness of the separator of Manufacturing Example 1 decreased by about 15% after compression, whereas the thickness of the separator of Comparative Example 3 decreased by about 17% after compression.

Referring to FIG. 4(a), the separator of Manufacturing Example 1 showed a resistance rise rate of 23.6% before and after compression, and referring to FIG. 4(b), the separator of Comparative Example 3 showed a resistance rise rate of 68.5% before and after compression.

The results as described above show that the separator according to Manufacturing Example 1 has excellent compression resistance, and thus its resistance rise rate before and after compression is shown to be low, which is in accordance with the SEM image observation results of FIG. 5. Specifically, Fig. 5 (a) the separator according to Manufacturing Example 1 before pressurization and Fig.5 (b) the separator according to Manufacturing Example 1 after pressurization maintained the pore structure before and after pressurization well. However, when comparing the separator according to Comparative Example 3 before pressurization (FIG. 5(c)) and the separator according to Comparative Example 3 after pressurization (FIG. 5(d)), it was confirmed in Comparative Example 3 that the structure of the pores collapsed, such that some of the pores were blocked after pressurization.

**Experimental Example 4. Checking heat resistance of separator**

The separator according to Manufacturing Example 1 was left at 150°C for 30 minutes to check dimensional change and volume change.

The volume change rate of the separator according to Manufacturing Example 1 was shown to be 0%.

**Experimental Example 5. Checking physical properties of two-layer structure separator**

Thicknesses, air permeabilities, and electrical resistances of the separators according to Manufacturing Examples 5 to 7 were checked, and the results are shown in Table 2 below. The thicknesses and air permeabilities of the separators were confirmed in the same manner as in the above-described Experimental Example.

Electrical resistance measurement

In order to manufacture 2016 sized coin cells, the separators manufactured in Manufacturing Examples 5 to 7 were punched to 19 ø, and an electrolyte was added to manufacture coin cells.
After leaving the coin cells for 3 hours, resistances of the coin cells were measured using an electrochemical impedance spectroscopy (EIS) device.
As the EIS device, Solartron's 1255B model was used, a frequency of $10^4$ to $10^5$ Hz was applied, and values obtained by recording the X-intercept values of the measured graph were recorded as electrical resistances in Table 2 below.
The electrolyte included one in which ethylene carbonate (EC), dimethyl carbonate (DMC), and ethyl methyl carbonate (EMC) were mixed at a weight ratio of 3 : 4 : 3, and which included, as additives, 3 mol of vinylene carbonate (VC), 1.5 mol of propanesultone (PS), 1 mol of ethylene sulfate (ESa), and 1 mol of lithium salt ($LiPF_6$).

[Table 2]

| Classification | Thickness of separator ($\mu$m) | Air permeability (sec/100cc) | Electrical resistance ($\Omega$) |
|---|---|---|---|
| Manufacturing Example 5 | 14.7 | 18 | 0.98 |
| Manufacturing Example 6 | 14.6 | 10 | 0.94 |
| Manufacturing Example 7 | 14.6 | 147 | 0.77 |

**Experimental Example 6. Checking rates of changes in air permeability due to compression of two-layer structure separator**

Changes in air permeability were checked while compressing the separators according to Manufacturing Examples 5 to 7, and the results are shown in Table 3 and FIG. 6 below.

Compression resistance evaluation

Three sheets of a 5 cm × 5 cm PET film (35 $\mu$m) were disposed on two sheets of A4 paper, and a 5 cm × 5 cm separator was disposed on the PET film. One sheet of the 5 cm × 5 cm PET film (35 $\mu$m) was again disposed on the separator, and two sheets of A4 paper were disposed on the PET film.
Pressure was sequentially applied to A4 papers disposed up and down using a surface rolling mill (Rhotec, pressing machine, V-30) in the order of ① for 10 seconds under conditions of 70°C and 5.2 MPa, ② for 10 seconds under conditions of 70°C and 7.8 MPa, and ③ for 10 seconds under conditions of 80°C and 7.8 MPa. Table 2 below shows the respective air permeabilities after ① to ③ and the rates of changes in air permeability before and after compression.

[Table 3]

| Classification | Air permeability (sec/100cc) | | | Air permeability change rate (%) |
|---|---|---|---|---|
| | ① | ② | ③ | |
| Manufacturing Example 5 | 22.1 | 26.1 | 27.9 | 55 |
| Manufacturing Example 6 | 12.0 | 12.5 | 14.0 | 40 |
| Manufacturing Example 7 | 227.9 | 367.5 | 573.3 | 390 |

Referring to Table 3 and FIG. 6, the separators according to Manufacturing Examples 5 and 6 showed the air permeability increase rate of less than 100% even after compression by including a layer containing an inorganic material in an excessive amount compared to the polymer resin. Meanwhile, the separator according to Manufacturing Example 7 showed an air permeability increase rate of 390% according to compression. Such results, in Manufacturing Example 7, are due to the fact that the pores of the separator are clogged or the uniformity is lowered due to structural collapse of the inorganic particles and polymer resin included in the coating layer.

**Experimental Example 7. Checking shutdown function under high temperature conditions**

Shutdown temperatures of the separators were checked by performing heat gurley evaluation while raising the temperatures of the separators according to Manufacturing Examples 5 to 7. Air permeabilities of the separators were measured while raising the temperatures of the separators at a rate of 2°C/min, and temperatures at time points when the air permeability values rapidly increased were defined as the shutdown temperatures, and the corresponding temperatures are recorded in Table 4 below.

**Experimental Example 8. Cell safety evaluation**

Preparation of positive electrode

A positive electrode slurry containing lithium manganese composite oxide (NCMA) as a positive electrode active material was applied to an aluminum thin film, dried, and then compressed in a roll mill to prepare a positive electrode having a porosity of 26% and a capacity per unit area of 4.5 mAh/cm$^2$.

Preparation of negative electrode

A negative electrode slurry containing pure Si as a negative electrode active material was applied to a copper thin film, dried, and then compressed in a roll mill to prepare a negative electrode having a porosity of 40% and a capacity per unit area of 8.5 mAh/cm$^2$.

Preparation of electrolyte

As an organic solvent, fluoroethylene carbonate (FEC) and ethyl methyl carbonate (EMC) were mixed at a volume ratio of 3:7, and $LiPF_6$ was added to prepare an electrolyte having a $LiPF_6$ concentration of 1.0M.

Manufacture of electrochemical devices

Pouch-type mono cells were manufactured as electrochemical devices using the positive electrode, negative electrode, and electrolyte prepared as described above and the separators of Manufacturing Examples 5 to 7.
After the positive electrode was cut to a size of 4 cm × 4 cm, the upper end of 0.5 cm × 1 cm was welded with an aluminum tab having a width of 1 cm. After the negative electrode was cut to a size of 4.5 cm × 4.5 cm, the upper end of 0.5 cm × 1 cm was welded with a nickel tab having a width of 1 cm. After cutting the separators to a size of 5 cm × 5 cm, they were put into pouches in the order of the positive electrode, the separators, and the negative electrode, the three corners of the pouches were sealed at 250°C to inject 250 mL of the electrolyte, and they were sealed in order under vacuum and high temperatures to manufacture pouch cells.

Hot box evaluation

A jig was connected to a room temperature chamber in a state in which the pouch cells were fully filled. Thereafter, it was allowed to reach 130°C at a temperature raise rate of 5°C/min, and then whether the cells were ignited or not was evaluated while maintaining it for 30 minutes. During the temperature rise or while maintaining the temperature at 130°C, the temperature or voltage of the cells rapidly rose and ignited was evaluated as Fail, and that of the cells maintained normally after 30 minutes was evaluated as Pass.

[Table 4]

| Classification | Shutdown temperature (°C) | Whether it passed hot box evaluation or not |
|---|---|---|
| Manufacturing Example 5 | 124 | Pass |
| Manufacturing Example 6 | 182 | Fail |
| Manufacturing Example 7 | 136 | Fail |

**Claims**

1. A separator for an electrochemical device, comprising a silicon-based negative electrode, wherein the separator is a freestanding porous separator that does not contain a polyolefin substrate, and comprises a polymer binder and inorganic particles, and the content of the inorganic particles is greater than the content of the polymer binder based on the total weight of the separator.

2. The separator of claim 1, wherein the separator comprises 60 to 95% by weight of the inorganic particles based on the total weight of the separator.

3. The separator of claim 1, wherein the separator satisfies a thickness of 15 to 45 $\mu$m, and has a value defined by Equation 1 below of 1 to 18%:

$$[\text{Equation 1}]$$

$$(T1 - T2) / T1 \times 100$$

In Equation 1,

   T1 is an initial thickness of the separator, and
   T2 means a thickness after pressing the separator at 5.2 MPa and 70°C for 10 seconds in a surface rolling mill.

4. The separator of claim 1, wherein the separator further comprises a second layer formed on at least one surface of the separator, the second layer comprises a polymer resin different from the polymer binder, and the polymer binder has a higher melting point than the polymer resin.

5. The separator of claim 4, wherein the separator satisfies a thickness of 10 to 45 $\mu$m, and has an air permeability change rate of less than 100% when pressurized at 80°C and a pressure of 7.8 MPa for 10 seconds.

6. An electrochemical device comprising:

   a positive electrode;
   a silicon-based negative electrode; and
   the separator for an electrochemical device according any one of claims 1 to 5, which is positioned between the positive electrode and the silicon-based negative electrode.

7. The electrochemical device of claim 6, wherein the silicon-based negative electrode comprises one or more silicon-based active materials selected from the group consisting of Si, $SiO_x$ (0<x<2), SiC, and Si alloys.

8. A method for manufacturing a separator for an electrochemical device, comprising a silicon-based negative electrode, the method comprising a step of forming a freestanding porous separator by simultaneously electrospinning a first spinning solution containing a polymer binder and a second spinning solution containing inorganic particles, wherein the second spinning solution has a flow rate greater than that of the first spinning solution.

9. The method of claim 8, wherein the inorganic particles are one or more selected from the group consisting of $SiO_2$, $Al_2O_3$, AlOOH, $TiO_2$, $ZrO_2$, $BaSO_4$, $BaTiO_3$, ZnO, MgO, $Mg(OH)_2$, $Al(OH)_3$, $Pb(Zr,Ti)O_3$, $Pb(Mg_{1/3}Nb_{2/3})O_3$-$PbTiO_3$ (PMN-PT), $HfO_2$, $SrTiO_3$, $SnO_2$, $CeO_2$, MgO, NiO, CaO, $Y_2O_3$, SiC, $ZnSn(OH)_6$, $Zn_2SnO_4$, $ZnSnO_3$, $Sb_2O_3$, $Sb_2O_4$, and $Sb_2O_5$.

10. The method of claim 8, wherein the polymer binder is one or more selected from the group consisting of polyethylene terephthalate, polybutylene terephthalate, polyamide, polyimide, polyetherimide, polyacrylonitrile, polyvinyl alcohol, polyaramid, and polystyrene.

11. The method of claim 8, wherein the step of forming the freestanding porous separator is electrospinning the first spinning solution and the second spinning solution at a flow rate ratio of 1:8 to 1:100.

12. The method of claim 8, further comprising a step of pressurizing the formed freestanding porous separator at 25 to 60°C.

13. The method of claim 8, further comprising a step of forming a second layer by electrospinning a third spinning solution containing a polymer resin on at least one surface of the porous separator, wherein the polymer binder has a higher melting point than the polymer resin.

14. The method of claim 13, wherein the second layer is formed by being disposed on the porous separator and rolled.

15. The method of claim 14, wherein the rolling is performed at a temperature lower than the melting point of the polymer resin.

16. The method of claim 13, wherein the polymer resin is one or more selected from the group consisting of polyvinylidene fluoride, polyvinylidene fluoride-hexafluoropropylene, polyethylene glycol, polypropylene glycol, polyethylene oxide, and polymethyl methacrylate.

Fig. 1

Fig. 2

Fig. 3

Δ Separator thickness change rate (%)

Fig. 4(a)

Fig. 4 (b)

Δ Ion conductivity (%) = 68.5%

Fig. 5 (a)

Fig. 5(b)

Fig. 5(c)

Fig. 5(d)

Fig. 6

## INTERNATIONAL SEARCH REPORT

| International application No. |
|---|
| **PCT/KR2023/009638** |

| **A.** | **CLASSIFICATION OF SUBJECT MATTER** |
|---|---|

**H01M 50/451**(2021.01)i; **H01M 50/443**(2021.01)i; **H01M 50/46**(2021.01)i; **H01M 50/491**(2021.01)i; **B05D 1/04**(2006.01)i; **B32B 37/06**(2006.01)i; **B32B 37/10**(2006.01)i; **B32B 27/08**(2006.01)i; **B32B 27/18**(2006.01)i; **B32B 27/36**(2006.01)i

According to International Patent Classification (IPC) or to both national classification and IPC

| **B.** | **FIELDS SEARCHED** |
|---|---|

Minimum documentation searched (classification system followed by classification symbols)

H01M 50/451(2021.01); H01G 11/00(2013.01); H01M 50/40(2021.01); H01M 50/403(2021.01); H01M 50/409(2021.01); H01M 50/431(2021.01); H01M 50/449(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 프리스탠딩(free standing), 음극(anode), 전기방사 (electrospinning)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | KR 10-2015-0084637 A (UNIST ACADEMY-INDUSTRY RESEARCH CORPORATION) 22 July 2015 (2015-07-22)<br>See paragraphs [0042]-[0108] and figures 1-3. | 1-16 |
| Y | KR 10-2021-0046405 A (LG CHEM, LTD.) 28 April 2021 (2021-04-28)<br>See paragraphs [0019] and [0062]. | 1-16 |
| Y | KR 10-2022-0011097 A (LG ENERGY SOLUTION, LTD.) 27 January 2022 (2022-01-27)<br>See paragraphs [0113]-[0178] and figure 1. | 4-5,13-16 |
| A | KR 10-2021-0033327 A (LG CHEM, LTD.) 26 March 2021 (2021-03-26)<br>See paragraphs [0024]-[0073]. | 1-16 |
| A | KR 10-2022-0021894 A (LG ENERGY SOLUTION, LTD.) 22 February 2022 (2022-02-22)<br>See paragraphs [0162]-[0164]. | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 December 2023** | **07 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | | International application No.<br>**PCT/KR2023/009638** | |
|---|---|---|---|---|---|
| Patent document<br>cited in search report | Publication date<br>(day/month/year) | Patent family member(s) | | Publication date<br>(day/month/year) | |
| KR 10-2015-0084637 A | 22 July 2015 | KR 10-1676688 B1 | | 29 November 2016 | |
| KR 10-2021-0046405 A | 28 April 2021 | CN 114514654 A | | 17 May 2022 | |
| | | EP 4033595 A1 | | 27 July 2022 | |
| | | US 2022-0384910 A1 | | 01 December 2022 | |
| | | WO 2021-075924 A1 | | 22 April 2021 | |
| KR 10-2022-0011097 A | 27 January 2022 | CN 115803959 A | | 14 March 2023 | |
| | | EP 4152509 A1 | | 22 March 2023 | |
| | | KR 10-2534840 B1 | | 26 May 2023 | |
| | | WO 2022-019572 A1 | | 27 January 2022 | |
| KR 10-2021-0033327 A | 26 March 2021 | None | | | |
| KR 10-2022-0021894 A | 22 February 2022 | CN 115868081 A | | 28 March 2023 | |
| | | EP 4142036 A1 | | 01 March 2023 | |
| | | JP 2023-524704 A | | 13 June 2023 | |
| | | US 2023-0246299 A1 | | 03 August 2023 | |
| | | WO 2022-035298 A1 | | 17 February 2022 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220083685
- KR 1020220107931